# EUROPEAN PATENT APPLICATION

(11) **EP 3 184 698 A1**
(43) Date of publication of application: **28.06.2017**
(21) Application number: 14900284.2
(22) Date of filing: 20.08.2014
(51) Int. Cl.: E02D 27/42, E02D 27/01

(54) **PREFABRICATED CONCRETE SURFACE FOUNDATION SYSTEM FOR PHOTOVOLTAIC AND THERMOSOLAR PLANTS AND METHOD FOR THE IMPLEMENTATION THEREOF**

(71) Applicant: Iconkrete 2012, S.L., 28035 Madrid (ES)
(72) Inventor: ABAD HUBER, Cesar, E-28035 Madrid (ES); FRANCO REY, Jorge, E-28035 Madrid (ES); CARPINTERO GRANDE, Javier, E-28035 Madrid (ES)
(74) Representative: Herrero & Asociados, S.L.
(86) International application number: PCT/ES2014/070664
(87) International publication number: WO 2016/026989

(57) **Abstract**

Foundation system for the implementation of thermosolar and photovoltaic plants that comprises a component (1) made from reinforced or prestressed prefabricated concrete constituted by a lower slab (2), a longitudinal central rib (3) in the top part and comprising a pillar (4) that emerges from the top part of the central rib.

Method for implementing said foundation that comprises the phases: prefabrication (13) of a panel (1) of reinforced or prestressed concrete, the laying-out (14) of a bed of sand (12) over a surface, placing (15) the component (1) on said bed of sand (12), filling (16) with granular material (11) over the lower slab (2) of the panel (1) up to the upper reference mark on the pillar (4), placing (17) a supporting structure (9) inside the pillar (4), wedging (18) of the supporting structure, and filling (19) of the existing hollow using mortar.

## Description

### OBJECT OF THE INVENTION

The present invention relates to a prefabricated concrete foundation system for the implementation of thermosolar and photovoltaic plants in the event that they are implemented on land on which solutions driven into the ground cannot be used, such as ground with pebbles or gravel, very hard ground or ground with chemical hazards.

The foundation system made from prefabricated concrete, object of this invention, is formed by a prefabricated concrete element formed by a lower slab from which a longitudinal rib emerges from the top part, from which a pillar with a preferably hollow cross section in turn emerges that serves as a fastener for the support structure. This prefabricated concrete element, which is already installed in its definitive location, is filled with granular material in order to ballast and increase the weight of the assembly in order to obtain greater stability when turning and sliding. This filling never exceeds the height of the upper reference mark of the concrete pillar.

This new foundation aims to considerably reduce the cost of implementation of traditional foundations for this type of structure, considerably improving the completion time, as well as simply and economically resolving the height variability of the support structure depending on the topography of the ground.

### BACKGROUND OF THE INVENTION

In the majority of cases, thermosolar and photovoltaic plants are configured by light metal structures that transmit their loads to the ground through piled concrete solutions or metal profiles driven into the ground.

There are cases in which metal profiles cannot be piled or driven into the ground, either because the geotechnics of the earth prevent it or make the implementation thereof expensive (very hard ground, the appearance of sludge, etc.) or because it the solar plant is implemented on tailing ponds that are in many cases toxic and are properly sealed and cannot be perforated.

The traditional foundation solution for the aforementioned cases is the implementation of "in situ" reinforced concrete slabs that are buried, semi-buried or on the surface, on which the support structure of the solar panels rests.

These structures transmit small axial loads, but significant horizontal loads mainly due to the wind and tremors, and are very sensitive to small movements of the foundations that cause changes in the orientation of the mirrors and panels with respect to the solar radiation which would notably reduce the thermal yield of the plant.

To prevent the foundations from sliding, the slabs must be very heavy and therefore, have a large amount of concrete, and as a result, a large amount of steel, due to the need to fulfil a minimum amount according to the regulations. All this significantly increases the cost of this type of solution.

Another drawback of this type of solution is that it needs concrete to be poured "in situ" and normally, this type of solar plant is installed far from any concrete production centre, which makes it difficult and expensive to manufacture the same.

An additional problem for pouring concrete "in situ" in lands over tailing ponds is the great weight of cement lorries, which sink or may cause these ponds to break.

The greatest problem of this type of installations in offering prefabricated foundations solutions is that the height of each support structure is different and the exact dimensions are almost never known in advance to be able to prefabricate each element to the corresponding height thereof. The present invention resolves this point, since all the support structures can have the same height as each other, as with the prefabricated concrete elements, and the maximum dimension of the support structure can be adjusted due to the hollow this foundation has by means of a simple securing system.

The applicant knows of other surface foundation systems for this type of solar plant.

As such, the Spanish utility model application with publication number ES1064028, for example, is known which presents a prefabricated foundation solution for solar plants formed by a solid concrete slab with a rectangular cross section. This solution requires a lot of steel and concrete and the transport and handling thereof is expensive since heavy weights must be handled.

Patent application FR2687704 presents a foundation based on a prefabricated concrete formwork with thin walls that are subsequently concreted "in situ" along with a reinforcement frame.

A prefabricated foundation system by the same author is patent P201330529, but it does not resolve the height adjustment of the support structure.

Another known patent is JPH10306457, which presents a thin-walled steel structure that does not resolve the height differences that are needed for this type of work and which would also seriously compromise the durability thereof due to chemical attack (sulphates, etc.) humidity, etc.

Lastly, Spanish patent application ES-2395099 describes a foundation for thermosolar plants by using a formwork and the subsequent "in situ" concreting.

The advantages of the present invention over the aforementioned foundations, including traditional foundations, are:
- Concrete poured "in situ" is not required since all the elements are prefabricated beforehand. This advantage is fundamental since this type of solar plant is normally installed far from any concrete production centre, which makes the manufacture of concrete difficult and expensive.
- As the concrete does not have to be poured "in situ", heavy lorries (cement mixers) that could sink or may cause these ponds to break do not have to transit through.
- A large amount of concrete and steel is saved since the area (and therefore the volume) of the prefabricated cross section is much smaller than the "in situ" slab. As the volume is smaller, the amount of reinforcement is greatly reduced.
- Large transport and lifting means are not required for the implementation thereof, since the cross section of the prefabricated element make it very light.
- It provides high resistance to horizontal movements due to two fundamental reasons: the first reason is that the lower surface of the slab of the prefabricated element has an intentionally high roughness in order to increase the friction coefficient between the ground and concrete, and the second reason is that the extra weight that this type of foundation needs is achieved through a non-resistant material that is much more economical than concrete, such as the soil itself from excavation.
- It enables buried, semi-buried or entirely surface foundations to be implemented without the need to reinforce during the work, due to the arrangement of the lateral ribs.
- It hugely increases the implementation speed since all the elements are prefabricated beforehand.
- It prevents the generally metal support structure from coming into contact with the ground, thus increasing the structural durability thereof.
- It enables the different heights necessary for the support structure in relation to the dimensions of the ground, more or less inserting said structure inside the pillar of the prefabricated element.

### DESCRIPTION OF THE INVENTION

The present invention presents a prefabricated concrete foundation solution for structures of solar and photovoltaic plants.

The support structures in this type of plant tend to be modular with more or less equidistant vertical supports on the foundation. Each module transmits its loads to the ground through a series of vertical pillars, which we call support structure, which are fastened to the corresponding foundation slab thereof. Each module is fastened to the independent foundation slab thereof.

The foundation system, object of this patent, is formed by a prefabricate component made from reinforced or prestressed concrete constituted by a lower slab that is ribbed in the top part thereof from which a pillar with a hollow and variable cross section emerges.

This prefabricated concrete element, which is already installed in its final location, is filled with granular material in order to ballast and increase the weight of the assembly in order to obtain greater stability when turning and sliding. The material itself extracted from the excavation may serve for this purpose.

In order to increase the friction coefficient between the prefabricated panel and the ground, it may have a rough finish on the lower part thereof.

Likewise, the lower slab of the prefabricated panel may have perforations to check the correct contact between the panel and the ground.

This filling never exceeds the maximum height of the pillar so that the support structure never enters into contact with the ground in order to not compromise the structural durability thereof.

The support structure is housed inside the hollow pillar and is positioned at the arranged height by means of a through bar through holes made in the pillar and the support structure that is previously drilled. The definitive fastening of the support structure to the pillar is resolved by subsequently filling the existing hollow with mortar.

An important detail of this invention lies in the characteristic shape of the hollow cross section of the pillar, which varies along the height thereof from larger to smaller or smaller to larger in order to create a widening or narrowing that enables two main aspects: achieve a perfect setting between the concrete pillar and the filling mortar in relation to axial tension and/or compression loads of the support structure, preventing sliding between both bodies and enabling the support structure to rotate or turn before the definitive fastening thereof, which is carried out by means of wedges and subsequent filling with mortar.

The method for implementing this foundation comprises the following stages:
- prefabricating a prefabricated component made from reinforced or prestressed concrete.
- laying-out of a bed of sand over an excavation base or directly over the surface.
- placing a prefabricated component on the bed of sand.
- filling with granular material over the lower slab of the prefabricated component up to a maximum of the upper reference mark of the concrete pillar.
- placing the previously perforated support structure inside the hollow pillar, fixing the height thereof by means of a bar or bolt that is inserted through the holes of the opposite faces of the concrete pillar.
- wedging the support structure against the inner walls of the concrete pillar and subsequent filling of the existing hole with mortar.

### BRIEF DESCRIPTION OF THE FIGURES

To complete the description provided herein, and for the purpose of helping to make the characteristics thereof more readily understandable, the present specification is accompanied by a set of figures, which, by way of illustration and not limitation, represent the following:

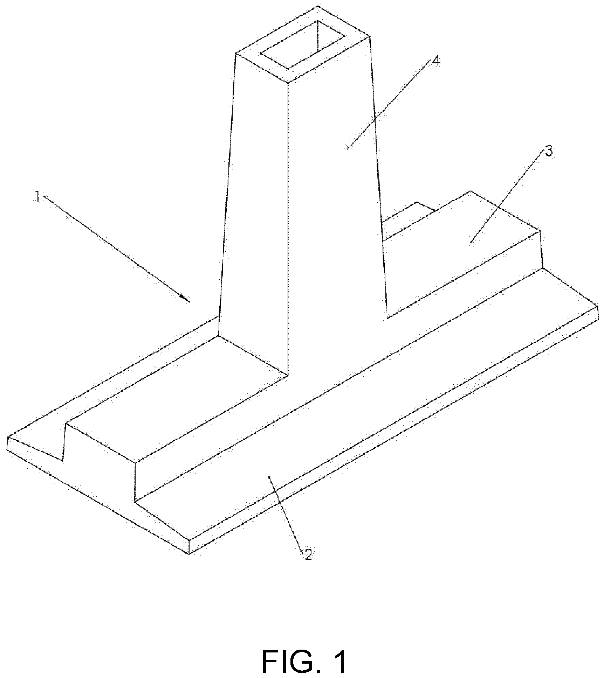

Figure 1 shows a perspective of the prefabricated component with a hollow pillar that forms part of the foundation system of the present invention.
Figure 2 shows a cross section of the prefabricated component with a hollow pillar that forms part of the foundation system of the present invention.
Figure 3 shows a cross section of the foundation system in the assembly thereof, object of the present invention.
Figure 4 shows a perspective of an example of the prefabricated component with a solid pillar.

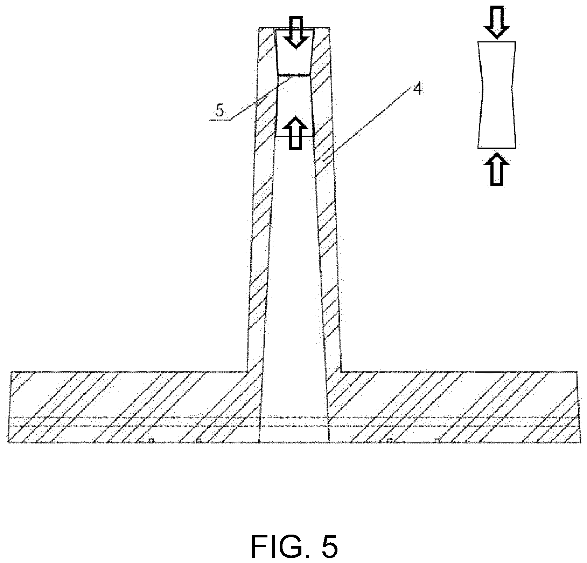

Figure 5 shows the narrowing inside the hollow pillar, which enables the tension and compression loads transmitted by the support structure to be absorbed.

### PREFERRED EMBODIMENT OF THE INVENTION

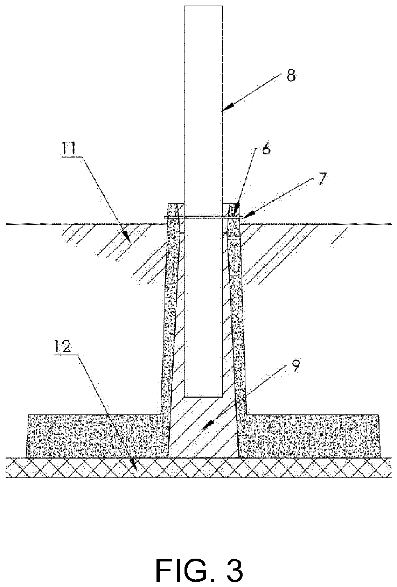

Figure 3 shows a perspective of the system in the assembly thereof, formed by a prefabricated component (1) of reinforced or prestressed concrete constituted by a lower slab (2) from which a longitudinal central rib (3) emerges from the top part thereof and a hollow (4) and a pillar with a hollow cross section thereon.

This prefabricated concrete component, which is already installed in its definitive location, is filled with granular material (11) in order to ballast and increase the weight of the assembly in order to obtain greater stability when turning and sliding. The material itself extracted from the excavation may serve for this purpose. This filling never exceeds the maximum height of the pillar (4) so that the support structure (8) never enters into contact with the ground in order to not compromise the structural durability thereof.

The support structure is housed inside the hollow pillar and is positioned at the arranged height by means of a through bar (7) through holes (6) made in the pillar (4) and the support structure (8). The definitive fastening of the support structure to the pillar is resolved by subsequently filling the existing hollow with mortar (9).

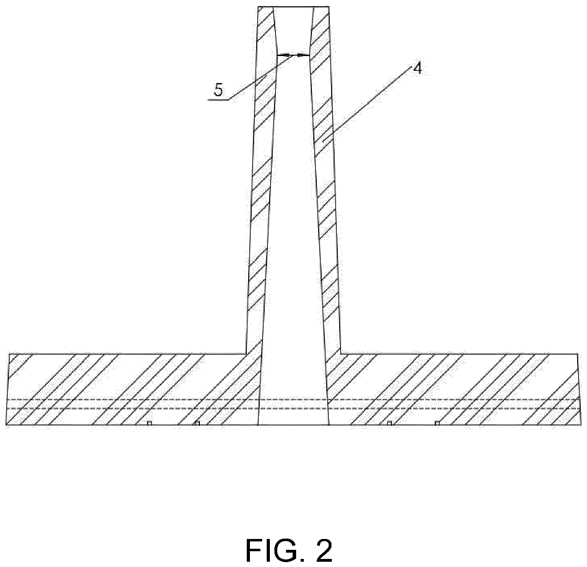

Figure 2 shows a cross section of the prefabricated concrete component (1) where a narrowing (5) of the inner hollow of the concrete pillar may be seen, achieving in this way a perfect setting between the concrete pillar (4) and the filling mortar (9) in relation to axial tension and/or compression loads of the support structure, preventing sliding between both bodies.

In order to increase the friction coefficient between the prefabricated component and the ground, it may have a rough finish on the lower part thereof.

Likewise, the lower slab of the prefabricated component may have perforations (6) to check the correct contact between the panel and the ground.

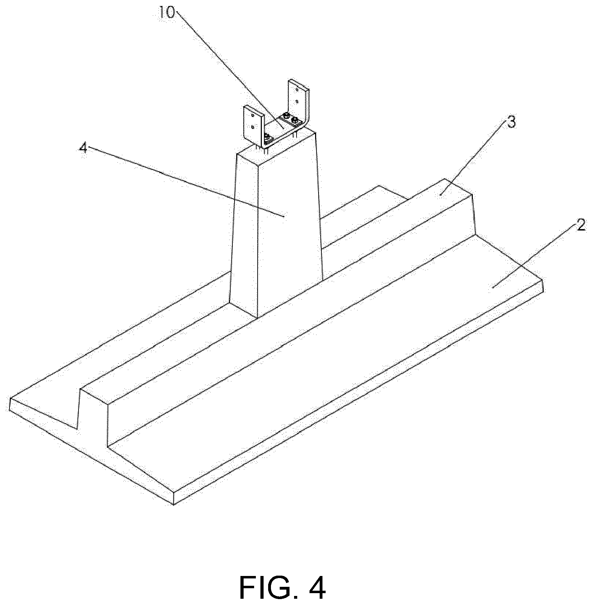

Figure 4 shows a perspective of the concrete component in the case that the pillar has a solid cross section. In this case, the support structure is fastened on the head of the pillar (4), metal plates (10) or fasteners being incorporated to facilitate the mounting of the support structure (8).

The method for implementing this foundation comprises the following stages:
- prefabricating a prefabricated component (1) made from reinforced or prestressed concrete.
- laying-out of a bed of sand over an excavation base or directly over the surface.
- placing a prefabricated component on the bed of sand (12).
- filling with granular material (11) over the lower slab (2) of the prefabricated component up to a maximum of the upper reference mark of the concrete pillar (4).
- placing the previously perforated support structure (8) inside the hollow pillar, fixing the height thereof by means of a bar (7) or bolt that is inserted through the holes (6) of the opposite faces of the concrete pillar.
- wedging the support structure against the inner walls of the concrete pillar and subsequent filling of the existing hole with mortar (9).

## Claims

1. A foundation system for the implementation of thermosolar and photovoltaic plants **characterised in that** it is formed by a component (1) made from reinforced or prestressed prefabricated concrete constituted by a lower slab (2) with a longitudinal central rib (3) from which a concrete pillar (4) emerges from the top part thereof.

2. The foundation system for the implementation of thermosolar and photovoltaic plants according to claim 1, **characterised in that** the cross section of the concrete pillar (4) is hollow.

3. The foundation system for the implementation of thermosolar and photovoltaic plants according to the preceding claims, **characterised in that** the inner cross section of the hollow pillar (4) varies along the height thereof from larger to smaller or smaller to larger in order to create a widening or narrowing (5) inside the pillar.

4. The foundation system for the implementation of thermosolar and photovoltaic plants according to any of the preceding claims, **characterised in that** longitudinal ribs, parallel to the central rib, emerge from the top part of the longitudinal ends of the lower slab.

5. The foundation system for the implementation of thermosolar and photovoltaic plants according to any of the preceding claims, **characterised in that** the lower surface of the prefabricated element has a rough finish.

6. The foundation system for the implementation of thermosolar and photovoltaic plants according to any of the preceding claims, **characterised in that** the hollow concrete pillar has two holes (6) located on opposite faces through which a bar (7) is inserted to be able to position the support structure (8) that is housed inside the hollow pillar, subsequently filling the existing hollow with mortar (9).

7. The foundation system for the implementation of thermosolar and photovoltaic plants according to claim 1, **characterised in that** the concrete pillar (4) has a solid cross section.

8. The foundation system for the implementation of thermosolar and photovoltaic plants according to claim 7, **characterised in that** the concrete pillar has metal plates (10) or fasteners incorporated to facilitate the mounting of the support structure (8).

9. The foundation system for the implementation of thermosolar and photovoltaic plants according to any of the preceding claims, **characterised in that** the lower slab (2) of the prefabricated panel has perforations to check the correct contact between the panel and the ground.

10. The foundation system for the implementation of thermosolar and photovoltaic plants according to any of the preceding claims, **characterised in that** the lower slab and the central rib are filled with granular material (11) without exceeding the height of the concrete pillar (4).

11. The foundation method for the implementation of thermosolar and photovoltaic plants **characterised in that** it comprises the stages:
- prefabricating a prefabricated component (1) made from reinforced or prestressed concrete,
- laying-out of a bed of sand (12) over an excavation base or directly over the surface,
- placing a prefabricated component on the bed of sand (12),
- filling with granular material (11) over the lower slab (2) of the prefabricated component up to a maximum of the upper reference mark of the concrete pillar (4),
- placing the previously perforated support structure (8) inside the hollow pillar, fixing the height thereof by means of a bar (7) or bolt that is inserted through the holes (6) of the opposite faces of the concrete pillar,
- wedging the support structure against the inner walls of the concrete pillar and subsequent filling of the existing hole with mortar (9).
